# EUROPEAN PATENT APPLICATION

(11) **EP 4 557 208 A1**
(43) Date of publication of application: **21.05.2025**
(21) Application number: 23839500.8
(22) Date of filing: 30.06.2023
(51) Int. Cl.: G06Q 50/10, G06Q 10/04

(54) **PREDICTION DEVICE, PREDICTION METHOD, AND PREDICTION PROGRAM**

(30) Priority: 13.07.2022 JP 2022112232
(71) Applicant: DENTSU INC., Tokyo 105-7001 (JP)
(72) Inventor: KISHIMOTO, Wataru, Tokyo 105-7001 (JP); SUZUKI, Mayuko, Tokyo 105-7077 (JP); ENDO, Ken, Tokyo 105-7077 (JP); YONEDA, Ko, Tokyo 105-7077 (JP)
(74) Representative: SSM Sandmair
(86) International application number: PCT/JP2023/024510
(87) International publication number: WO 2024/014328

(57) **Abstract**

A prediction device, a prediction method, and a prediction program capable of predicting a viewing rate with high accuracy are provided. A prediction device according to one aspect of the present disclosure includes: a storage unit that stores a reference feature amount of a viewing rate of a past program; a setting unit that sets a request frame to at least one of target programs; an extraction unit that extracts a feature amount of the request frame; and an acquisition unit that acquires a prediction feature amount regarding prediction of a viewing rate of the request frame based on the reference feature amount and the feature amount of the request frame.

## Description

### Technical Field

The present disclosure relates to a prediction device, a prediction method, and a prediction program.

### Background Art

The present applicant has filed a patent application for a prediction device that accurately predicts broadcast contact information according to a condition regarding broadcast information, and has acquired a patent right (Patent Literature 1).

The prediction device of Patent Literature 1 includes a storage unit, a calculation unit, and a prediction unit. The storage unit stores broadcast contact information indicating a degree of contact from a receiver with respect to each of a plurality of pieces of broadcast information broadcasted on a broadcast medium. The calculation unit calculates at least two or more statistical values of a first statistical value, a second statistical value, and a third statistical value. The prediction unit obtains prediction contact information indicating a degree of contact from a receiver with respect to broadcast information scheduled to be broadcasted, based on at least two or more statistical values. The first statistical value represents a moving average of broadcast contact information of each of a plurality of pieces of broadcast information broadcasted on a plurality of days closest to a scheduled broadcast date on which broadcast information scheduled to be broadcasted is broadcasted among a plurality of pieces of broadcast information broadcasted on the broadcast medium. The second statistical value represents a moving average of broadcast contact information of each of a plurality of pieces of broadcast information broadcasted on a plurality of days closest to a scheduled broadcast date, corresponding to the same day of the week as the scheduled broadcast date, among a plurality of pieces of broadcast information broadcasted on the broadcast medium. The third statistical value represents a moving average of broadcast contact information of each of a plurality of pieces of broadcast information broadcasted in the same time zone on a plurality of days closest to a scheduled broadcast date, corresponding to the same day of the week as the scheduled broadcast date, among a plurality of pieces of broadcast information broadcasted on the broadcast medium.

### Citation List

### Patent Literature

Patent Literature 1: Japanese Patent No. 6902636

### Summary of Invention

### Technical Problem

However, the conventional technologies including Patent Literature 1 have room for improvement from the viewpoint of predicting a viewing rate with high accuracy.

Therefore, one object of the present disclosure is to provide a prediction device, a prediction method, and a prediction program capable of predicting a viewing rate with high accuracy.

### Solution to Problem

A prediction device according to one aspect of the present disclosure includes: a storage unit that stores a reference feature amount of a viewing rate of a past program; a setting unit that sets a request frame to at least one of target programs; an extraction unit that extracts a feature amount of the request frame; and an acquisition unit that acquires a prediction feature amount regarding prediction of a viewing rate of the request frame based on the reference feature amount and the feature amount of the request frame.

### Advantageous Effects of Invention

According to one aspect of the present disclosure, it is possible to provide a prediction device, a prediction method, and a prediction program capable of predicting a viewing rate with high accuracy.

### Brief Description of Drawings

Fig. 1 is a diagram illustrating an example of a prediction calculation method in conventional long-term trend prediction.
Fig. 2 is a diagram illustrating an example of a relation between a past viewing rate and a target period of an explanatory variable in the conventional long-term trend prediction.
Fig. 3 is a diagram illustrating a first example of storage processing of a reference feature amount of a viewing rate of a past program.
Fig. 4 is a diagram illustrating a second example of storage processing of a reference feature amount of a viewing rate of a past program.
Fig. 5 is a diagram illustrating an example of acquisition of a prediction feature amount of a request frame based on a reference feature amount and a feature amount of the request frame.
Fig. 6 is a diagram illustrating an example of a schematic configuration of a system including a prediction device.
Fig. 7 is a functional block diagram illustrating an example of an internal configuration of the prediction device.
Fig. 8 is a diagram illustrating an example of a functional configuration of a cost calculation device, a broadcast distribution device, and a prediction device.
Fig. 9 is a diagram illustrating an example of a hardware configuration of the cost calculation device, the broadcast distribution device, and the prediction device.

### Description of Embodiments

Examples of a mechanism (model) for predicting a viewing rate of a target program include recent trend prediction (SHAREST_RT, Recent Trend Prediction Version) and long-term trend prediction (SHAREST_LT, Long-term Trend Prediction Version).

The recent trend prediction is to predict a viewing rate of a target program whose scheduled broadcast date is close, and is, for example, prediction processing of predicting the viewing rate with high accuracy based on detailed data such as program organization, genre, and evaluation on the Internet. A prediction target date (broadcast date of the target program) in the recent trend prediction may be, for example, one day to seven days after the present (seven days to one day before OA).

The long-term trend prediction is to predict a viewing rate of a target program whose scheduled broadcast date is far, and is, for example, prediction processing regarding medium-term and long-term predictions in consideration of a secular transition of the viewing rate and a seasonal change. A prediction target date (broadcast date of the target program) in the long-term trend prediction may be, for example, 8 days to 70 days after the present (70 days to 8 days before OA).

In the long-term trend prediction, the viewing rate of the target program is predicted based on a real-time viewing rate (average viewing rate) every 10 minutes after 8 days to 70 days (70 days to 8 days before OA) from the present. At that time, data obtained by weekly learning (starting every Wednesday at 19:00) for a predetermined period, for example, past two years may be used as learning data. Further, for example, daily prediction (daily start at 3:00) may be adopted as a prediction target period. In this case, up to 70 days before the latest date of prompt report data may be set as the prediction target period. The prediction target period may be extendable.

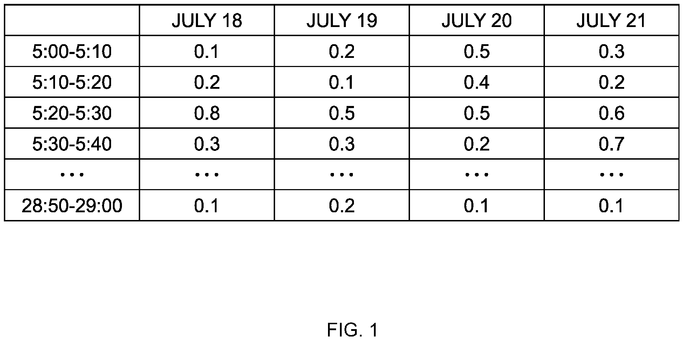

Fig. 1 is a diagram illustrating an example of a prediction calculation method in conventional long-term trend prediction. In a model of Fig. 1, daily viewing rate prediction is performed in all targets (for example, 31 layers) × all stations using a recurrent neural network (RNN). In the example of Fig. 1, when it is desired to predict a viewing rate on July 21 using actual measurement values until July 20 of a certain year, the actual measurement values are learned along time series, and a prediction value is output. Specifically, in a time zone of 5:00-5:10, 0.3, which is a prediction value for July 21, is output based on actual measurement values until July 20 (actual measurement values from July 18 to July 20 are illustrated). Similarly, in a time zone of 5:10-5:20, 0.2, which is a prediction value for July 21, is output based on actual measurement values until July 20 (actual measurement values from July 18 to July 20 are illustrated). In addition, in a time zone of 5:20-5:30, 0.6, which is a prediction value for July 21, is output based on actual measurement values until July 20 (actual measurement values from July 18 to July 20 are illustrated). In addition, in a time zone of 5:30-5:40, 0.7, which is a prediction value for July 21, is output based on actual measurement values until July 20 (actual measurement values from July 18 to July 20 are illustrated). In addition, in a time zone of 28:50-29:00, 0.1, which is a prediction value for July 21, is output based on actual measurement values until July 20 (actual measurement values from July 18 to July 20 are illustrated).

As described above, since the conventional long-term trend prediction is a model that learns and predicts a past average viewing rate every 10 minutes, there is a tendency (technical problem) that the prediction accuracy of the viewing rate is deteriorated (there is a gap between a prediction viewing rate and an actual measurement viewing rate).

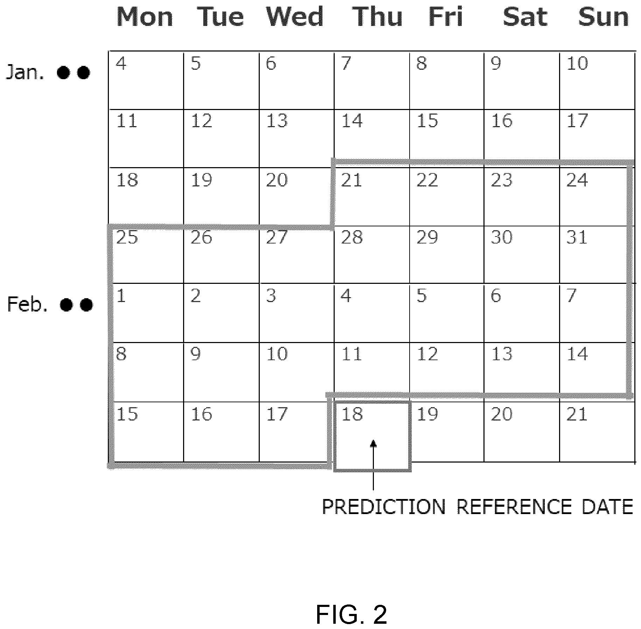

Fig. 2 is a diagram illustrating an example of a relation between a past viewing rate and a target period of an explanatory variable in the conventional long-term trend prediction. In the example of Fig. 2, February 18 of a certain year is set to a prediction reference date, and a past average viewing rate up to n days before is calculated and defined as an explanatory variable. Here, it is assumed that an average n days ago is calculated from the day before the prediction reference date, and n = 28, that is, an average of previous 4 weeks (average of each day regardless of the day of the week) is calculated. Specifically, a past average viewing rate from January 21 to February 17 of a certain year is calculated and defined as an explanatory variable, and is used for viewing rate prediction on February 18. As such, previous day data of the prediction reference date based on the daily coordination exists, and the past average viewing rate is acquired from coordinated latest data at a prediction reference date time point by utilizing the latest data as much as possible. Further, in order to take into account the latest trend, the past viewing rate is calculated from the day before the prediction reference date. The past viewing rate is used as a variable for performing the viewing rate prediction on the prediction reference date with high accuracy. Furthermore, in a case where the prediction target is set to February 19 to April 29 of a certain year, an average viewing rate n days before in the past counted from February 17 may be used as an explanatory variable for a prediction value of April 29 that is 70 days after February 18 that is the prediction reference date.

In the conventional long-term trend prediction, for example, even if a part of a prediction value 60 days before OA is corrected to a correct value because it is an error, the prediction accuracy may be inferior to a previous 8-week average. Further, in a case where attention is paid to accuracy comparison for each program broadcast duration, the prediction accuracy may be deteriorated (inferior) depending on broadcast time (for example, in a mini program of about 6 minutes) as compared with the previous 8-week average. In particular, there is a tendency that a viewing rate of a mini program included in an A time such as 19:00 to 23:00 on weekdays or 18:00 to 23:00 on Saturday, which is considered to have the best viewing rate, is predicted to be higher than an actual viewing rate. This is presumed to be because the conventional long-term trend prediction is a model that learns and predicts the past average viewing rate every 10 minutes. For the same reason, prediction accuracy of the viewing rate tends to be deteriorated even in a program of 56 minutes adjacent to (affected by) the mini program inserted in the A time. As described above, the accuracy of the viewing rate prediction of the long-term trend prediction may not keep up with the actual growth even if it tends to increase as a whole. That is, even if a trend is grasped, there is a possibility that it cannot be predicted in the case of rapid growth with few examples in the past.

The present inventors have regarded the above problems as important technical problems, and have conceived a prediction device, a prediction method, and a prediction program having the following constituent requirements in order to predict a viewing rate particularly in long-term trend prediction with high accuracy.

In order to improve a recurrent neural network (RNN), a time-series change for each day of the week is changed to a model structure that is easy to learn, and a time-series trend is changed to an objective variable that is easy to learn. In addition, a request frame, which is a program frame that is likely to affect viewing rate prediction, is set, and prediction value correction according to the request frame is performed. Specifically, a mini program frame in which viewing rate prediction is likely to deteriorate (estimation is likely to be high) is set to the request frame, and a model for converting and outputting a prediction value in the long-term trend prediction based on a feature amount of the request frame is constructed (newly added).

### <Storage Processing (Storage Step)>

A reference feature amount of a viewing rate of a past program is stored. The reference feature amount may be the viewing rate of the past program, or may be some parameter related to the viewing rate of the past program.

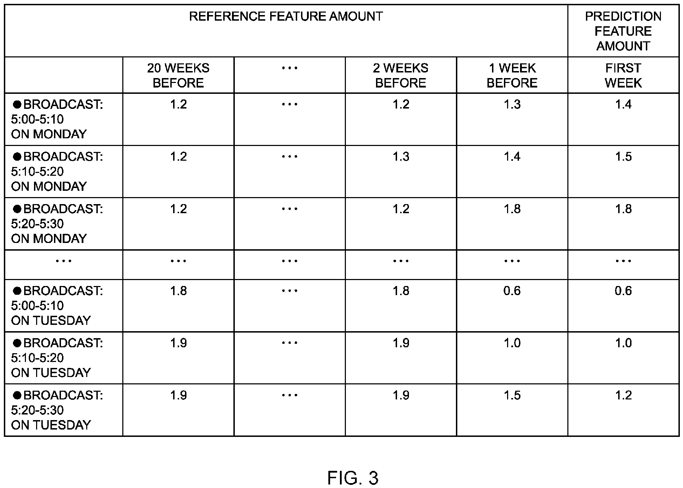

Fig. 3 is a diagram illustrating a first example of storage processing (storage step) of a reference feature amount of a viewing rate of a past program. In a model of Fig. 3, daily viewing rate prediction is performed in all targets (for example, 31 layers) × all stations using a recurrent neural network (RNN).

As illustrated in Fig. 3, in a time zone in increments of 10 minutes such as 5:00-5:10, 5:10-5:20, and 5:20-5:30 on Monday of a certain broadcast station (• broadcast), actual measurement values (actual measurement viewing rates and actual measurement feature amounts) from 20 weeks before to 1 week before the prediction reference date (prediction target date) are stored. In addition, in a time zone in increments of 10 minutes such as 5:00-5:10, 5:10-5:20, and 5:20-5:30 on Tuesday of a certain broadcast station (• broadcast), actual measurement values (actual measurement viewing rates and actual measurement feature amounts) from 20 weeks before to 1 week before the prediction reference date are stored. Similarly, in a time zone in increments of 10 minutes for Wednesday to Sunday of a certain broadcast station (• broadcast), actual measurement values (actual measurement viewing rates and actual measurement feature amounts) from 20 weeks before to 1 week before the prediction reference date are stored. Since the prediction reference date corresponds to any day of the week of Monday to Sunday, a feature amount of a viewing rate in a predetermined period across a plurality of past programs is stored, and a time-series viewing rate on the same day of the week as the prediction reference date is stored as the reference feature amount. That is, when the reference feature amount is stored, a time-series change for each day of the week is changed to a structure that is easier to learn. Further, as will be described in detail later, by multiplying the reference feature amount by correction based on the feature amount of the request frame set to at least one of the target programs, the prediction feature amount regarding the prediction of the viewing rate of the request frame can be acquired. The prediction feature amount may be the prediction viewing rate of the request frame, or may be some parameter related to the prediction viewing rate of the request frame. Note that, in Fig. 3, in the second and subsequent weeks, recurrent prediction (update of the prediction viewing rate) may be executed by adding the prediction feature amount to the feature amount for parameter correction.

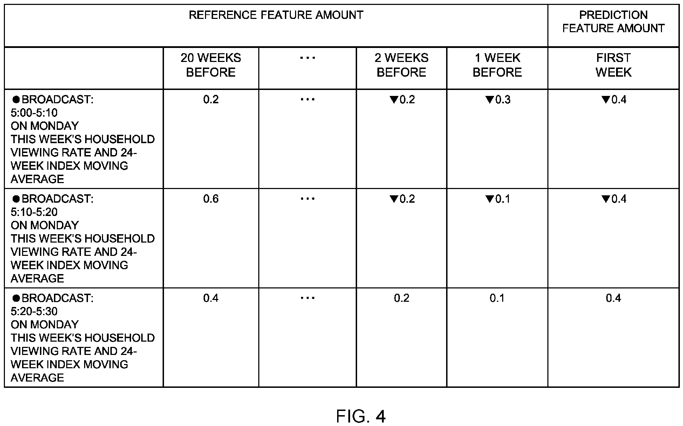

Fig. 4 is a diagram illustrating a second example of storage processing (storage step) of a reference feature amount of a viewing rate of a past program. In a model of Fig. 4, daily viewing rate prediction is performed in all targets (for example, 31 layers) × all stations using a recurrent neural network (RNN).

As illustrated in Fig. 4, in a time zone in increments of 10 minutes such as 5:00-5:10, 5:10-5:20, and 5:20-5:30 on Monday of a certain broadcast station (• broadcast), actual measurement values (actual measurement viewing rates and actual measurement feature amounts) from 20 weeks before to 1 week before the prediction reference date (prediction target date) are stored. Similarly, in a time zone in increments of 10 minutes for Wednesday to Sunday of a certain broadcast station (• broadcast), actual measurement values (actual measurement viewing rates and actual measurement feature amounts) from 20 weeks before to 1 week before the prediction reference date (prediction target date) are stored. These actual measurement values can be a difference between a viewing rate of this week including the prediction reference date and a 24-week index moving average viewing rate of the prediction reference date. Note that a standard value obtained by taking the difference between the actual measurement values is not limited to the 24-week index moving average viewing rate, and may be a 4-week index moving average viewing rate, an 8-week index moving average viewing rate, a 12-week index moving average viewing rate, or a 48-week index moving average viewing rate. As such, the feature amount of the viewing rate in the predetermined period across the plurality of past programs is stored, and the difference between the viewing rate of this week including the prediction reference date and the index moving average viewing rate in the predetermined period before the prediction reference date is stored as the reference feature amount. That is, the time-series trend is changed to an objective variable that is easy to learn. Further, as will be described in detail later, by multiplying the reference feature amount by correction based on the feature amount of the request frame set to at least one of the target programs, the prediction feature amount regarding the prediction of the viewing rate of the request frame can be acquired. The prediction feature amount may be the prediction viewing rate of the request frame, or may be some parameter related to the prediction viewing rate of the request frame. Note that, in Fig. 4, in the second and subsequent weeks, the recurrent prediction (update of the prediction viewing rate) may be executed by adding the prediction feature amount to the feature amount for parameter correction.

Here, the past viewing rate which is an example of the reference feature amount of the viewing rate of the past program includes, for example, a program average viewing rate before a predetermined period, an end viewing rate before the predetermined period, an average viewing rate on the same day of the previous year, and an average viewing rate in the same time zone of the previous year. The past viewing rate further includes a latest moving average viewing rate, a moving average viewing rate of the same day, a missing flag 1, a moving average viewing rate of the same day and the same time zone, and a missing flag 2. The latest moving average viewing rate, the moving average viewing rate of the same day, and the moving average viewing rate of the same day and the same time zone are examples of statistical values of broadcast contact information.

The program average viewing rate before the predetermined period represents a program average viewing rate of a program of each of a host frame, a back frame, a front frame, and a front back frame broadcasted the predetermined period before the prediction target date. The end viewing rate before the predetermined period represents a viewing rate at the end of the program of the host frame broadcasted the predetermined period before the prediction target date.

The latest moving average viewing rate represents a moving average of a program average viewing rate of each of the latest N (N is an integer of 2 or more) broadcasts of the prediction target date. The N broadcasts are broadcasts of the program of the host frame, and are extracted in accordance with a broadcast interval of each program such as a daily program, a weekly program, an annual program, or an irregular program. The latest N times of the prediction target date may be referred to as the previous N times. The program average viewing rate of each of the previous N broadcasts may be calculated, and the latest moving average viewing rate may be calculated using the program average viewing rates of the N broadcasts.

The moving average viewing rate of the same day of the week represents the previous N moving average viewing rates corresponding to the same day of the week as the prediction target date. The missing flag 1 is a flag indicating the presence or absence of a program broadcasted on the same day of the week as the prediction target date. The moving average viewing rate of the same day of the week and the same time zone represents the previous N moving average viewing rates corresponding to the same day of the week and the same time zone as the prediction target date. The missing flag 2 is a flag indicating the presence or absence of a program broadcasted on the same day of the week and in the same time zone as the prediction target date.

As the moving average, for example, a simple moving average or a weighted moving average can be used. As the weighted moving average, for example, a linearly weighted moving average or an exponentially weighted moving average can be used. The weight of the weighted moving average is set to be larger as the broadcast date is later. The moving average viewing rate calculated by the weighted moving average is an example of a statistical value in which a contribution of broadcast contact information of second broadcast information broadcasted after first broadcast information is larger than a contribution of broadcast contact information of the first broadcast information.

By using the weighted moving average, the contribution given to the moving average viewing rate by the broadcast having the later broadcast date is larger than the contribution given to the moving average viewing rate by the broadcast having the earlier broadcast date, so that the moving average viewing rate largely reflecting the recent viewing trend can be obtained. As a result, the recent viewing trend is easily reflected in the prediction viewing rate, and the prediction accuracy is improved. A plurality of moving average viewing rates having different values of N, such as the previous 4 moving average viewing rates, the previous 8 moving average viewing rates, and the previous 10 moving average viewing rates, may be used in combination.

The previous N broadcasts to be the moving average target are not necessarily the same programs as the programs to be predicted, and may be various programs belonging to the same program category as the programs to be predicted. Moreover, program description information of each program included in the previous N broadcasts may include a predetermined keyword or synonyms thereof included in program description information of the programs to be predicted. The synonyms of the predetermined keyword can be specified by the thesaurus.

### <Setting Processing (Setting Step)>

A request frame is set to at least one of target programs for which a viewing rate is to be predicted. There is a degree of freedom in the way of setting the request frame, and various design changes are possible. However, as an example, it is preferable to set a sub-program (mini program) having a relatively short broadcast duration adjacent to a main program having a relatively long broadcast duration in the target programs as the request frame. This is because, as described above, when attention is paid to the accuracy comparison for each program broadcast duration, there is a case where the prediction accuracy of the mini program of about 6 minutes is deteriorated depending on the broadcast time, and in particular, the viewing rate of the mini program included in the A time such as 19:00 to 23:00 on weekdays or 18:00 to 23:00 on Saturday, which is considered to have the best viewing rate, tends to be predicted higher than the actual viewing rate. Alternatively, a program of 56 minutes adjacent to (affected by) the mini program, which likewise tends to deteriorate the prediction accuracy of the viewing rate, may be set as the request frame.

### <Extraction Processing (Extraction Step)>

A feature amount of a set request frame, for example, a mini program frame is extracted. Examples of the feature amount of the request frame include the following (1) to (9).
(1) Broadcast duration of request frame
(2) Day of week (start day of week and end day of week) of request frame
(3) Time zone (start hour, end hour, start minute, and end minute) of request frame
(4) Broadcast station of request frame
(5) Saturday and Sunday flag (start and end) of request frame
(6) Holiday flag (start and end) of request frame
(7) Weekday holiday flag (start and end) of request frame
(8) Time crossing flag (whether or not start hour and end hour are the same) of request frame
(9) Day crossing flag (whether or not 29 hour crossing is made) of request frame

As a purpose of adopting the above (1) as the feature amount (variable) of the request frame, in a case of a mini-frame program having a short broadcast duration, there is a high possibility that an actual measurement viewing rate is lower than a base 10-minute average prediction viewing rate, and such a tendency is learned (reflected) in the viewing rate prediction.

As a purpose of adopting the above (2) to (4) as the feature amount (variable) of the request frame, there is a difference in tendency that the actual measurement viewing rate is higher/lower/does not vary as compared with the base 10-minute average prediction viewing rate, depending on a frame of a specific broadcast station/day of the week/time zone, and the difference is learned (reflected) in the viewing rate prediction.

As a purpose of adopting the above (5) to (7) as the feature amount (variable) of the request frame, in a case of Saturday and Sunday/holiday/weekday holiday, the viewer's behavior is more likely to change as compared with weekdays, and such a tendency is learned (reflected) in the viewing rate prediction.

As a purpose of adopting the above (8) as the feature amount (variable) of the request frame, a viewer tends to switch channels at a time interval (• hour), and a difference between a base 10-minute average prediction viewing rate and an actual measurement viewing rate is often different between a program starting just at 0 minute and a program starting a few minutes before the program, and such a tendency is learned (reflected) in the viewing rate prediction.

As a purpose of adopting the above (9) as the feature amount (variable) of the request frame, the tendency of the viewing rate by time crossing is different from that of a normal program in an early morning program (especially, time crossing between 4:00 and 5:00), and such a difference is learned (reflected) in the viewing rate prediction.

When the feature amount of the set request frame, for example, the mini program frame is extracted based on the above, it is preferable to extract the broadcast duration, the weekday holiday flag, the time crossing flag, and the day crossing flag of the request frame. These feature parameters are extremely useful to eliminate adverse effects caused by the conventional long-term trend prediction being a model that learns and predicts the average viewing rate every 10 minutes in the past, and to execute highly accurate viewing rate prediction. Alternatively, when the feature amount of the set request frame, for example, the mini program frame is extracted, the broadcast duration, the day of the week, the time zone, the broadcast station, the Saturday and Sunday flag, the holiday flag, the weekday holiday flag, the time crossing flag, and the day crossing flag of the request frame may be extracted. Even in this case, it is possible to eliminate adverse effects caused by the conventional long-term trend prediction being the model that learns and predicts the average viewing rate every 10 minutes in the past, and to execute highly accurate viewing rate prediction.

### <Acquisition Processing (Acquisition Step)>

A prediction feature amount regarding the prediction of the viewing rate of the request frame is acquired based on the stored reference feature amount and the extracted feature amount of the request frame. In other words, the stored reference feature amount is corrected based on the extracted feature amount of the request frame to acquire the prediction feature amount regarding the prediction of the viewing rate of the request frame. Here, the prediction feature amount may be the prediction viewing rate of the request frame, or may be some parameter related to the prediction viewing rate of the request frame.

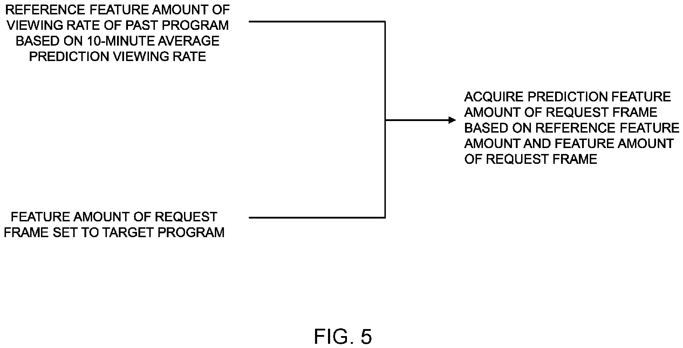

Fig. 5 is a diagram illustrating an example of acquisition of a prediction feature amount of a request frame based on a reference feature amount and a feature amount of the request frame. As illustrated in Fig. 5, a reference feature amount of a viewing rate of a past program based on a 10-minute average prediction viewing rate and a feature amount of a request frame set to a target program are input. With respect to the reference feature amount, since information of a program frame cannot be grasped at a prediction time point, the 10-minute average prediction viewing rate is calculated without using the information of the program frame, and the reference feature amount is calculated based on the 10-minute average prediction viewing rate. Further, a time-series viewing rate of the same day of the week as the prediction reference date is used, or a 24-week moving average difference (recent trend) is added and subtracted to calculate a prediction value in which a trend is taken into consideration. As described above, the feature amount of the request frame may include at least one of a broadcast duration, a day of the week, a time zone, a broadcast station, a Saturday and Sunday flag, a holiday flag, a weekday holiday flag, a time crossing flag, and a day crossing flag of the request frame. Then, a prediction feature amount regarding the prediction of the viewing rate of the request frame is acquired based on the input reference feature amount and the input feature amount of the request frame (the prediction feature amount is acquired by correcting the reference feature amount based on the feature amount of the request frame). As such, a model (prediction value conversion model of the request frame) for correcting the prediction feature amount based on the feature amount (broadcast time or the like) of the request frame is added. For example, it is possible to improve accuracy of viewing rate prediction by reading the feature amount such as the time zone or the time crossing from the program information and correcting a program of a short duration such as a mini program frame. More specifically, in consideration of the fact that the prediction viewing rate of the mini program frame is likely to be estimated to be high, the prediction viewing rate of the mini program frame can be corrected to be low, and the prediction viewing rate can be caused to be close to the actual measurement value.

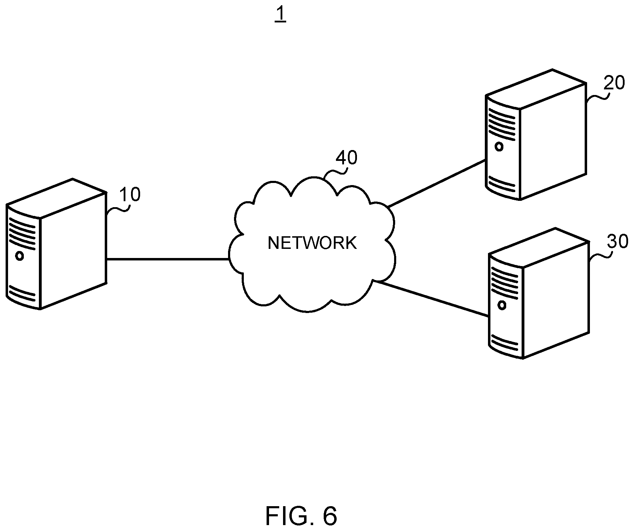

Fig. 6 is a diagram illustrating an example of a schematic configuration of a system including a prediction device (viewing rate prediction device). A system 1 includes a cost calculation device 10, a broadcast distribution device 20, and a prediction device (viewing rate prediction device) 30. The cost calculation device 10, the broadcast distribution device 20, and the prediction device 30 are communicably connected to each other by a network 40.

The cost calculation device 10 calculates, for example, the cost of a television CM. The cost calculation device 10 calculates the cost of the television CM based on a calculation formula including a viewing rate (prediction viewing rate) of a target program into which the television CM is inserted.

The cost calculation device 10 acquires, for example, the cost for each advertising pattern of a spot CM in a predetermined period (for example, one week) of a certain broadcast station (which may be replaced with a channel). Here, the cost in the present disclosure may mean a cost per rating indicating a fee per viewing rate (GRP) (1%). The advertising pattern may include an existing (arbitrary) advertising pattern (for example, an inverted L type, a whole day type, a Y type, a U type, a linear type, a late-night type, an all-day daytime type, and the like). In addition, the cost calculation device 10 may acquire a cost for each advertising pattern, a time zone constituting the advertising pattern, and the like based on an input (for example, setting by the broadcast station) from the outside.

The cost calculation device 10 may acquire (for example, receive) information for cost calculation. For example, the cost calculation device 10 may acquire (receive) viewing rate information (for example, it may be referred to as a household viewing rate, an individual viewing rate, an individual overall viewing rate, a viewing rate ("All & P + C7 (Program + Commercial 7)" or the like) obtained by adding real-time viewing and time shift viewing up to a seventh day after broadcast, and the like.) regarding each advertisement frame from the prediction device 30. The cost calculation device 10 may derive the cost of the A time 1 frame based on, for example, the setting of the unit price of one A time by the broadcast station and the information of the viewing rate acquired from the prediction device 30.

The cost calculation device 10 may be a mobile terminal (mobile communication terminal) such as a mobile phone, a smartphone, or a tablet terminal, or may be a fixed communication terminal such as a personal computer (PC) or a server. That is, the cost calculation device 10 in the present disclosure can be replaced with a communication device. The cost calculation device 10 may communicate with a network (such as the Internet) in a wired and/or wireless manner (for example, long term evolution (LTE), new radio (NR), Wi-Fi (registered trademark), or the like).

The broadcast distribution device 20 is a device that distributes broadcast to a television (TV). Here, the television (television receiver) may be a device having a function of receiving at least one of terrestrial broadcast, broadcast by broadcasting satellite (BS)/communications satellite (CS), Internet broadcast (Internet television), and the like. For example, the television may be at least one of a multi-function television, a smart TV, an Internet protocol (IP) TV, a set-top box, or the like. Note that broadcast means transmission of electric communication intended to be directly received by the public, and may include wireless broadcast, Internet broadcast, and the like.

The prediction device 30 is a device that aggregates actual viewing rates of programs broadcasted on televisions. Further, the prediction device 30 is a device that predicts a viewing rate of a program (target program) to be broadcasted on the television. The viewing rate may be stored in a predetermined time unit (for example, seconds, minutes, and hours). The prediction device 30 may transmit information regarding the viewing rate (for example, the viewing rate (prediction viewing rate) of the target program into which the television CM is inserted) to another device (for example, the cost calculation device 10) via the network.

The prediction device 30 may be, for example, a device managed by a television viewing rate researcher. The prediction device 30 may acquire and manage data of a viewing history from a measuring device connected to a television of a predetermined household (for example, a research cooperation household). Note that the viewing rate may be calculated or predicted from the data. In the prediction device 30, the viewing rate (individual viewing rate of a target) for each predetermined target (a user corresponding to a predetermined attribute) may be stored. In the present disclosure, the target is assumed to be gender/age classification (a C (Child) group, a T (Teen) group, an M (Male) 1-M3 group, and an F (Female) 1-F3 group) used in the field of marketing, but the present disclosure is not limited to such classification.

The prediction device 30 is configured to be able to predict an "advertisement viewing rate of a viewer" of the television with high accuracy using a new analysis method of handling big data. The prediction device 30 can include a data input unit that inputs data source information, an explanatory variable conversion unit that performs specific processing on the data source information input from the data input unit to convert the data source information into an explanatory variable, a program implementation/execution unit that implements a program of a predetermined algorithm, and a data output unit that outputs a result by the program implementation/execution unit. The program implementation/execution unit can execute an algorithm of the implemented program by using the data source information input from the data input unit and the explanatory variable obtained by being converted into the explanatory variable by the explanatory variable conversion unit, prediction viewing rate data obtained by executing the algorithm can be output from the output unit, and an advertisement frame can be optimized based on the output prediction viewing rate data. Here, a viewing rate of a related program (for example, the broadcast before the previous time of the serial drama, the broadcast before the previous time of the special program, and the like) related to the target program can be used as the data source information for calculating the viewing rate (prediction viewing rate) of the target program into which the television CM is inserted.

Note that the system configuration is an example, and the present disclosure is not limited thereto. For example, one device is included for each type of device in Fig. 6, but the number of devices is not limited thereto, and a plurality of devices may be provided. The system 1 may be configured not to include some devices, or may be configured such that a function of one device is implemented by a plurality of devices. Conversely, functions of a plurality of devices may be implemented by one device. For example, at least two of the cost calculation device 10, the broadcast distribution device 20, and the prediction device 30 may be implemented on one server.

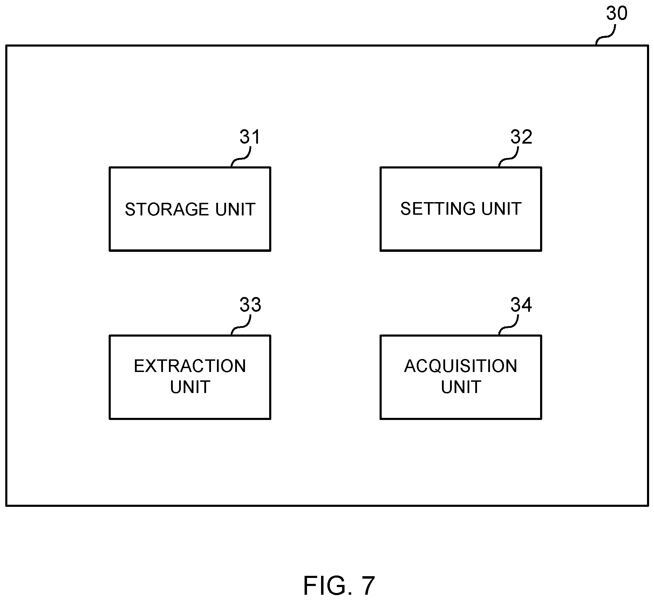

Fig. 7 is a functional block diagram illustrating an example of an internal configuration of the prediction device 30. The prediction device 30 includes a storage unit (processor, first processor) 31, a setting unit (processor, second processor) 32, an extraction unit (processor, third processor) 33, and an acquisition unit (processor, fourth processor) 34. A prediction method and a prediction program of the present disclosure are implemented by causing a computer included in the prediction device 30 (the storage unit 31, the setting unit 32, the extraction unit 33, and the acquisition unit 34) to execute predetermined processing steps.

The storage unit (processor, first processor) 31 stores a reference feature amount of a viewing rate of a past program. The storage unit 31 stores a feature amount of a viewing rate in a predetermined period across a plurality of past programs, and stores a time-series viewing rate of the same day of the week as the prediction reference date as the reference feature amount. The storage unit 31 stores the feature amount of the viewing rate in the predetermined period across the plurality of past programs, and stores a difference between a weekly viewing rate including the prediction reference date and an index moving average viewing rate in a predetermined period before the prediction reference date as the reference feature amount.

The setting unit (processor, second processor) 32 sets a request frame to at least one of the target programs. The setting unit 32 sets, in the request frame, a sub-program (mini program) having a relatively short broadcast duration adjacent to a main program having a relatively long broadcast duration in the target program.

The extraction unit (processor, third processor) 33 extracts a feature amount of the request frame. The extraction unit 33 extracts a broadcast duration, a weekday holiday flag, a time crossing flag, and a day crossing flag of the request frame as the feature amount of the request frame. The extraction unit 33 extracts a broadcast duration, a day of the week, a time zone, a broadcast station, a Saturday and Sunday flag, a holiday flag, a weekday holiday flag, a time crossing flag, and a day crossing flag of the request frame as the feature amount of the request frame.

The acquisition unit (processor, fourth processor) 34 acquires a prediction feature amount regarding the prediction of the viewing rate of the request frame based on the reference feature amount and the feature amount of the request frame. The acquisition unit 34 acquires the prediction feature amount regarding the prediction of the viewing rate of the request frame by correcting the reference feature amount based on the feature amount of the request frame.

Note that the present disclosure also covers a content in which the "viewing rate" is replaced with a specific index (or a degree of improvement, an offset, and the like in a specific index). The specific index may be an index for determining an advertisement effect, an intermediate index for improving key performance indicators (KPIs) of an advertiser, or the like, and may include, for example, a recognition rate, reach, return on advertising spend (ROAS), return on investment (ROI), or the like. At least a part of the description "viewing rate" may be replaced with any of the above-described specific indices.

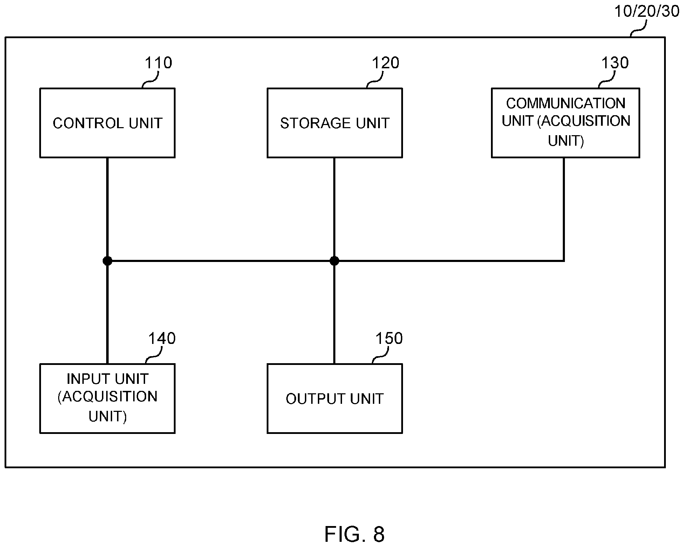

Fig. 8 is a diagram illustrating an example of a functional configuration of the cost calculation device 10, the broadcast distribution device 20, and the prediction device (viewing rate prediction device) 30. As illustrated in Fig. 8, each of the cost calculation device 10, the broadcast distribution device 20, and the prediction device 30 includes a control unit 110, a storage unit 120, a communication unit 130, an input unit 140, and an output unit 150. Note that Fig. 8 illustrates an example of functional blocks of the cost calculation device 10, the broadcast distribution device 20, and the prediction device 30, and other functional blocks not illustrated in Fig. 8 may be included. In addition, a configuration not including some functional blocks may be employed.

The control unit 110 controls the cost calculation device 10, the broadcast distribution device 20, and the prediction device 30. The control unit 110 can be configured with a controller, a control circuit, or a control device described based on common recognition in the technical field according to the present invention.

The storage unit 120 stores information used by the cost calculation device 10, the broadcast distribution device 20, and the prediction device 30. The storage unit 120 can be configured with, for example, a memory, a storage, a storage device, and the like described based on common recognition in the technical field according to the present invention.

The communication unit 130 performs communication of the cost calculation device 10, the broadcast distribution device 20, and the prediction device 30 (for example, mutual communication between them). The communication unit 130 can be configured with a transmitter/receiver, a transmission/reception circuit, or a transmission/reception device described based on common recognition in the technical field according to the present invention. Note that the communication unit 130 may include a transmission unit and a reception unit.

The input unit 140 receives inputs in the cost calculation device 10, the broadcast distribution device 20, and the prediction device 30. Furthermore, the input unit 140 may be connected to a predetermined device, storage medium, or the like and may receive an input of data. The input unit 140 may output, for example, an input result to the control unit 110. The input unit 140 can be configured with an input device such as a keyboard, a mouse, and a button, an input/output terminal, an input/output circuit, and the like described based on common recognition in the technical field according to the present invention. Furthermore, the input unit 140 may have a configuration integrated with a display unit (for example, a touch panel).

The output unit 150 performs output in the cost calculation device 10, the broadcast distribution device 20, and the prediction device 30. For example, the output unit 150 may include a display unit that displays an image, a voice output unit that outputs a voice, and the like. The display unit can be configured with, for example, a display device such as a display, a monitor, or the like described based on common recognition in the technical field according to the present invention. Furthermore, the voice output unit can be configured with an output device such as a speaker or the like described based on common recognition in the technical field according to the present invention.

Note that the block diagrams used in the description of the above embodiments illustrate blocks in units of functions. These functional blocks (components) are implemented by any combination of hardware and/or software. In addition, means for implementing each functional block is not particularly limited. That is, each functional block may be implemented by one physically coupled device, or may be implemented by a plurality of devices in which two or more physically separated devices are connected to each other in a wired or wireless manner.

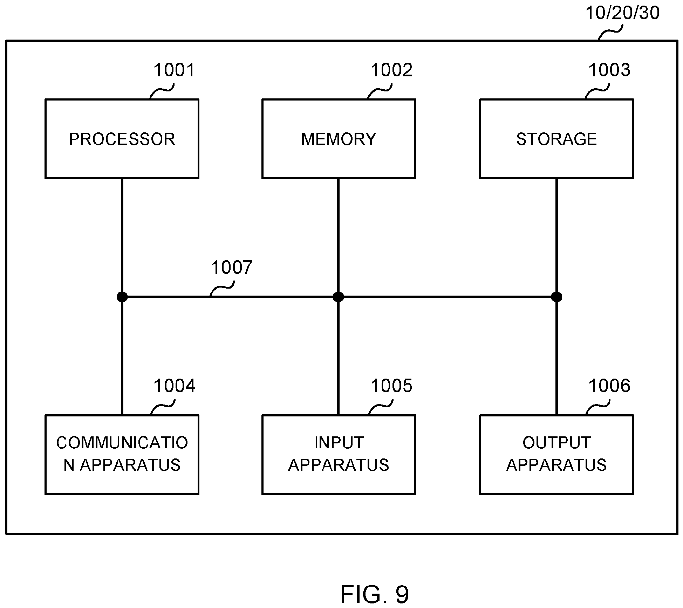

For example, a device (cost calculation device 10, broadcast distribution device 20, and prediction device 30) according to an embodiment of the present disclosure may function as a computer that performs prediction processing (viewing rate prediction processing) of the present disclosure. Fig. 9 is a diagram illustrating an example of a hardware configuration of the cost calculation device 10, the broadcast distribution device 20, and the prediction device 30. The cost calculation device 10, the broadcast distribution device 20, and the prediction device 30 described above may be physically configured as a computer device including a processor 1001, a memory 1002, a storage 1003, a communication device 1004, an input device 1005, an output device 1006, a bus 1007, and the like.

Note that, in the present disclosure, an apparatus, a circuit, a device, a unit, a server, and the like can be replaced with each other. The hardware configuration of the cost calculation device 10, the broadcast distribution device 20, and the prediction device 30 may be configured to include one or a plurality of each device illustrated in the drawing, or may be configured without including some devices.

For example, although only one processor 1001 is illustrated, there may be a plurality of processors. Furthermore, the processing may be executed by one processor, or various types of processing may be executed simultaneously, sequentially, or using other methods by two or more processors. Note that the processor 1001 may be implemented by one or more chips.

Each function in the cost calculation device 10, the broadcast distribution device 20, and the prediction device 30 is implemented by causing predetermined software (program) to be loaded on hardware such as the processor 1001 and the memory 1002, so that the processor 1001 performs an arithmetic operation, and controls communication by the communication device 1004, reading and/or writing of data in the memory 1002 and the storage 1003, and the like.

The processor 1001 operates, for example, an operating system to control the entire computer. The processor 1001 may be configured with a central processing unit (CPU) including an interface with a peripheral device, a control device, an arithmetic device, a register, and the like. Note that each unit such as the above-described control unit 110 may be implemented by the processor 1001.

In addition, the processor 1001 reads a program (a program code), a software module, data, and the like from at least one of the storage 1003 and the communication device 1004 to the memory 1002, and executes various types of processing according to the data. As the program, a program that causes a computer to execute at least a part of the operations described in the above-described embodiments is used. For example, the control unit 110 may be implemented by a control program stored in the memory 1002 and operated in the processor 1001, and other functional blocks may be similarly implemented.

The memory 1002 is a computer-readable storage medium, and may include, for example, at least one of a read only memory (ROM), an erasable programmable ROM (EPROM), an electrically EPROM (EEPROM), a random access memory (RAM), or another appropriate storage medium. The memory 1002 may be referred to as a register, a cache, a main memory (main storage device), or the like. The memory 1002 may store a program (a program code), a software module, and the like that can be executed to implement the method according to the embodiment.

The storage 1003 is a computer-readable storage medium, and may be configured with, for example, at least one of a flexible disk, a floppy (registered trademark) disk, a magneto-optical disk (for example, a compact disc (such as a compact disc ROM (CD-ROM)), a digital versatile disc, or a Blu-ray (registered trademark) disc), a removable disk, a hard disk drive, a smart card, a flash memory device (for example, a card, a stick, or a key drive), a magnetic stripe, a database, a server, or another appropriate storage medium. The storage 1003 may be referred to as an auxiliary storage device. Note that the above-described storage unit 120 may be implemented by the memory 1002 and/or the storage 1003.

The communication device 1004 is hardware (transmission/reception device) for performing communication between computers via at least one of a wired network and a wireless network, and is also referred to as, for example, a network device, a network controller, a network card, a communication module, or the like. The communication device 1004 may include a SIM card. Note that the above-described communication unit 130 may be implemented by the communication device 1004.

The input device 1005 is an input device (for example, a keyboard, a mouse, and the like) that receives an input from the outside. The output device 1006 is an output device (for example, a display, a speaker, and the like) that performs output to the outside. Note that the input device 1005 and the output device 1006 may be configured integrally (for example, a touch panel). Note that the input unit 140 and the output unit 150 described above may be implemented by the input device 1005 and the output device 1006, respectively.

In addition, the respective devices such as the processor 1001 and the memory 1002 are connected to each other by a bus 1008 for communicating information. The bus 1007 may be configured with a single bus or may be configured with different buses between devices.

In addition, the cost calculation device 10, the broadcast distribution device 20, and the prediction device 30 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of the above-described hardware.

### (Modification)

Note that the terms described in the present disclosure and/or terms necessary for understanding the present disclosure may be replaced with terms having the same or similar meanings.

The information, the parameter, and the like described in the present disclosure may be represented by using an absolute value, may be represented by using a relative value from a predetermined value, or may be represented by using another piece of corresponding information. In addition, names used for parameters and the like in the present disclosure are not limited in any respect.

The information, signals, and the like described in the present disclosure may be represented using any one of a variety of different techniques. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

The information, the signals, and the like may be input and output via a plurality of network nodes. The input/output information, signals, and the like may be stored in a specific location (for example, a memory) or may be managed using a table. The input/output information, signals, and the like can be overwritten, updated, or added. The output information, signals, and the like may be deleted. The input information, signals, and the like may be transmitted to another device.

Furthermore, notification of predetermined information (for example, notification of "being X") is not limited to explicit notification, and may be performed implicitly (for example, by not notifying the predetermined information or by notifying another piece of information).

Software, whether referred to as software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

Software, an instruction, information, and the like may be transmitted and received via at least one of a transmission medium and a signal waveform. For example, when software is transmitted from a website, a server, or other remote sources using at least one of a wired technology (a coaxial cable, an optical fiber cable, a twisted pair, a digital subscriber line (DSL), or the like) and a wireless technology (an infrared ray, a microwave, and the like), at least one of the wired and wireless technologies is included within the definition of the transmission medium.

The terms "system" and "network" used in the present disclosure may be used interchangeably.

Each aspect/embodiment described in the present disclosure may be used alone, may be used in combination, or may be switched in execution. In addition, the order of the processing procedure, sequence, flowchart, and the like of each aspect/embodiment described in the present disclosure may be changed as long as there is no contradiction. For example, for the methods described in the present disclosure, elements of various steps are presented using an example order, and are not limited to the presented particular order.

As used in the present disclosure, the phrase "based on" does not mean "based only on" unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to the first and second elements do not imply that only two elements may be employed or that the first element must in any way precede the second element.

When the present disclosure uses the terms "include", "including", and variations thereof, such terms are intended to be inclusive in a manner similar to the term "comprising". Furthermore, the term "or" used in the present disclosure is intended not to be an exclusive OR.

In the present disclosure, for example, when articles such as a, an, and the in English are added by translation, the present disclosure may include a case in which a noun following such articles is a plural form.

Although the invention according to the present disclosure has been described in detail above, it is apparent to those skilled in the art that the invention according to the present disclosure is not limited to the embodiments described in the present disclosure. The invention according to the present disclosure can be implemented as modifications and variations without departing from the spirit and scope of the invention defined based on the description of the claims. Therefore, the description of the present disclosure is for the purpose of illustration and does not bring any restrictive meaning to the invention according to the present disclosure.

The present application is based on Japanese Patent Application No. 2022-112232 filed on July 13, 2022. All contents are included herein.

## Claims

1. A prediction device comprising:
a storage unit that stores a reference feature amount of a viewing rate of a past program;
a setting unit that sets a request frame to at least one of target programs;
an extraction unit that extracts a feature amount of the request frame; and
an acquisition unit that acquires a prediction feature amount regarding prediction of a viewing rate of the request frame based on the reference feature amount and the feature amount of the request frame.

2. The prediction device according to claim 1, wherein
the extraction unit extracts broadcast duration, a weekday holiday flag, a time crossing flag, and a day crossing flag of the request frame as the feature amount of the request frame.

3. The prediction device according to claim 1 or 2, wherein
the extraction unit extracts a broadcast duration, a day of the week, a time zone, a broadcast station, a Saturday and Sunday flag, a holiday flag, a weekday holiday flag, a time crossing flag, and a day crossing flag of the request frame as the feature amount of the request frame.

4. The prediction device according to claim 1 or 2, wherein
the setting unit sets, in the request frame, a sub-program having a relatively short broadcast duration adjacent to a main program having a relatively long broadcast duration in the target program.

5. The prediction device according to claim 1 or 2, wherein
the storage unit stores a feature amount of a viewing rate in a predetermined period across a plurality of past programs, and stores a time-series viewing rate of the same day of the week as a prediction reference date as the reference feature amount.

6. The prediction device according to claim 1 or 2, wherein
the storage unit stores a feature amount of a viewing rate in a predetermined period across a plurality of past programs, and stores a difference between a viewing rate of this week including a prediction reference date and an index moving average viewing rate in a predetermined period before the prediction reference date as the reference feature amount.

7. A prediction method comprising:
a step of storing a reference feature amount of a viewing rate of a past program;
a step of setting a request frame to at least one of target programs;
a step of extracting a feature amount of the request frame; and
a step of acquiring a prediction feature amount regarding prediction of a viewing rate of the request frame based on the reference feature amount and the feature amount of the request frame.

8. A prediction program for causing a computer to execute:
a step of storing a reference feature amount of a viewing rate of a past program;
a step of setting a request frame to at least one of target programs;
a step of extracting a feature amount of the request frame; and
a step of acquiring a prediction feature amount regarding prediction of a viewing rate of the request frame based on the reference feature amount and the feature amount of the request frame.
